# FASCICULE DE BREVET EUROPEEN

(11) **EP 1 964 307 B1**
(45) Date de publication et mention de la délivrance du brevet: **23.01.2019**
(21) Numéro de dépôt: 06841969.6
(22) Date de dépôt: 14.12.2006
(51) Int. Cl.: H04L 9/32

(54) **PROCÉDÉ POUR LA RÉALISATION D'UN COMPTEUR SÉCURISÉ SUR UN SYSTÈME INFORMATIQUE EMBARQUÉ DISPOSANT D'UNE CARTE A PUCE.**
VERFAHREN ZUM ERZEUGEN EINES SICHEREN ZÄHLERS AUF EINEM ONBOARD-COMPUTERSYSTEM MIT EINER CHIPKARTE
METHOD FOR CREATING A SECURE COUNTER ON AN ON-BOARD COMPUTER SYSTEM COMPRISING A CHIP CARD

(30) Priorité: 23.12.2005 FR 0513241
(43) Date de publication de la demande: 03.09.2008
(73) Titulaire: Trusted Logic Mobility SAS, 92190 Meudon (FR)
(72) Inventeur: FREY, Alexandre, F-92190 Meudon (FR); BOLIGNANO, Dominique, F-78810 Feucherolles (FR); APVRILLE, Axelle, F-06330 Roquefort les Pins (FR)
(74) Mandataire: D Young & Co LLP
(86) Numéro de dépôt international: PCT/FR2006/002766
(87) Numéro de publication internationale: WO 2007/080289

(56) Documents cités:
- EP-A- 1 376 306
- US-A1- 2003 097 344
- US-A1- 2004 054 901

## Description

La présente invention concerne un procédé pour la réalisation d'un compteur sécurisé sur un système informatique embarqué disposant d'une carte à puce.

Elle a plus particulièrement pour objet de fournir à un environnement embarqué (notamment un téléphone mobile) l'accès à un compteur monotone infalsifiable, résidant sur une carte à puce.

De l'état de l'art est divulgué dans les documents US 2004/054901 (D1) et US2003/097344 (D2).

Le document D1 concerne un registre pouvant être utilisé dans un environnement non sécurisé et dans lequel toute modification de ce registre peut être détectée. A cet effet, une clé privée et une séquence de données sont stockées dans le registre. Dans un mode de réalisation, un compteur sécurisé est utilisé, et la valeur de ce compteur sécurisé est incrémentée et stockée avec toute nouvelle donnée ajoutée à la séquence de données. La valeur du compteur sécurisé (si celle-ci est utilisée) et la nouvelle donnée sont signées à l'aide de la clé privée. Une nouvelle clé publique est également stockée et signée avec la nouvelle donnée. La clé privée associée à la nouvelle clé publique est également stockée dans le but de signer la prochaine donnée entrée. La clé privée qui a été utilisée pour signer la donnée entrée est détruite. Dans ces conditions, toute modification de la séquence peut être détectée.

Le document D2 concerne un système de transaction par carte comprenant une ou plusieurs cartes, un organisme de délivrance de ces cartes, un ou plusieurs terminaux et de manière optionnelle, un organisme de vérification, communicant par le biais de méthodes cryptographiques et d'authentification. Les cartes authentifient des messages en utilisant des clés publiques. L'intégrité des transactions et les mises à jour des cartes sont maintenus même lorsque que sont générées de manière intentionnelle une interruption et/ou une modification des données transmises entre la carte et le terminal. Les cartes ne révèlent au terminal aucune information non nécessaire à la transaction ou aucune information auxquelles le terminal ne devrait pas avoir accès.

D'une manière générale, on sait qu'un compteur monotone est un compteur qui garantit que sa valeur change à chaque appel, c'est-à-dire qu'il ne rend jamais deux fois la même valeur. De tels compteurs sont très utiles dans les systèmes informatiques par exemple pour la génération d'identifiants uniques, ainsi que pour la lutte contre les attaques de sécurité dites « par rejeu » (un attaquant ayant repéré à un instant t une valeur qui est autorisée peut, à l'instant t+delta, « rejouer », c'est-à-dire fournir la valeur précédemment repérée en espérant qu'elle soit toujours autorisée par le système).

Les compteurs monotones sont également pour la plupart incrémentaux, car cela ne présente pas de difficulté particulière à implémenter. Dans ce cas, le compteur fournit de plus la garantie qu'à chaque appel, il retourne une valeur plus grande que lors de l'appel précédent. Le temps est par exemple une source incrémentale universelle. Les compteurs monotones incrémentaux sont particulièrement intéressants pour ordonner des événements les uns par rapport aux autres. Par exemple, dans certains systèmes d'horodatage, on souhaite simplement savoir que le document A a été archivé avant le document B. Plutôt que d'utiliser une horloge interne (généralement coûteuse, pas précise et non sécurisée - c'est-à-dire qu'un attaquant pourrait modifier l'heure à sa volonté), les systèmes informatiques utilisent couramment un compteur monotone incrémental.

Les compteurs monotones incrémentaux sont également très prisés dans le domaine de la DRM ("Digital Rights Management" : gestion des droits numériques), notamment pour contrôler qu'un morceau précédemment joué ne pourra plus l'être une fois les droits afférents expirés.

Dans la suite de cette description, on appellera « compteur monotone » un compteur monotone incrémental.

Autant la réalisation d'un compteur monotone sur ordinateur personnel (PC) ne pose pas de réelle difficulté, *autant son intégration dans des environnements embarqués (téléphone portable par exemple) est chose plus compliquée.* En effet, pour pouvoir réaliser un compteur monotone, il faut disposer d'une zone de mémoire persistante réinscriptible plusieurs fois (pour sauvegarder la valeur du compteur lorsque celui-ci n'est pas sous tension). Or, l'intégration de mémoire persistante réinscriptible en environnement embarqué a un coût financier non négligeable, coût d'autant plus important si l'équipement concerné est amené à être déployé à grande échelle (exemple : un surcoût sur des millions de téléphones portables). Et pourtant, les environnements embarqués - comme les autres systèmes informatiques - ont besoin de compteurs monotones, la demande commerciale y est même sans doute plus importante en termes de DRM (jeux sur consoles vidéos portables, écoute de morceaux sur téléphone portable, iPod (marque déposée), etc.).

L'invention a plus particulièrement pour but de fournir une solution fiable et peu coûteuse pour réaliser un compteur monotone, dans les cas où l'environnement embarqué possède une carte à puce intelligente (c'est notamment le cas pour les téléphones portables, avec la carte SIM).
US-A-2004/0054901 décrit un système informatique. Un journal est prévu, qui peut être utilisé dans un environnement non sécurisé et dans lequel les annulations ou des changements dans le journal peuvent être détectés. Une séquence de données sécurisées est disponible, et une clé privée est stockée avec les données de séquence de données. Dans un mode de réalisation, un compteur sécurisé est utilisé, et la valeur de compteur sécurisé incrémenté et stocké avec chaque nouvelle entrée de données de la séquence de données. La valeur sûre de compteur (le cas échéant) et la nouvelle entrée de données sont stockées, signé par la clé privée. Également stocké et signé avec la nouvelle entrée de données est une nouvelle clé publique. La nouvelle clé privée correspondante est stockée pour une utilisation en signant une prochaine entrée de données, et la clé privée qui avait été utilisée pour signer les données sont détruites. De cette manière, les annulations et modifications de la séquence peuvent être détectés.
Elle propose, à cet effet, un procédé comprenant les phases opératoires suivantes :
(i) le stockage, en mémoire persistante de la carte à puce :
   a. d'une fonction de comptage FC,
   b. d'un compteur Cpt,
   c. d'une clef privée Cf stockée dans la partie de la zone mémoire protégée en lecture,
   le compteur Cpt et la clef privée Cf étant accessibles de la seule fonction de comptage FC,
(ii) l'exécution, lors de la réception par la carte à puce d'une requête de compteur émise par une entité requérante ER du système informatique embarqué, dans lequel l'entité requérante est en dehors de la carte à puce, des opérations suivantes :
   a. la modification, par la fonction de comptage FC, du compteur Cpt assurant l'unicité de la valeur de compteur retournée en réponse à une requête donnée,
   b. le calcul, par la fonction de comptage FC, d'une signature à partir de la valeur du compteur Cpt tel que modifié à l'étape (a) et de la clef privée Cf,
   c. l'envoi, par la fonction de comptage FC, d'une réponse à l'entité requérante ER, ladite réponse comportant la valeur du compteur Cpt tel que modifié à l'étape (a) et la signature calculée à l'étape (b),
(iii) l'exécution, lors de la réception par le système embarqué de la réponse à la requête de compteur, d'une vérification de la signature contenue dans cette réponse.

De manière générale l'entité requérante ER peut agir pour le compte d'une autre application, d'un système ou d'une personne physique interagissant avec le système embarqué.

Avantageusement, lors de l'étape de calcul d'une signature au cours de la phase d'exécution d'une requête de compteur, l'entité requérante ER sera préalablement authentifiée. La requête de compteur ne sera alors exécutée que si l'authentification a été effectuée avec succès.

De même, la vérification de la signature contenue dans la réponse à la requête de compteur pourra être effectuée à l'aide d'une clé publique stockée en mémoire persistante sur le système embarqué.

Selon ce procédé, le compteur monotone est réalisé sous la forme d'une application s'exécutant au sein d'une carte à puce intelligente (munie d'un microprocesseur). Cette application peut être *native* (c'est-à-dire directement exécutable directement sur le microprocesseur) ou *interprétée* par un moteur d'interprétation (exemple : une machine virtuelle Java, un interpréteur de script ...). Elle bénéficie :
- De la résistance matérielle (en termes de sécurité) de la carte à puce. Il est par exemple plus délicat de visualiser le contenu d'une carte à puce à l'aide d'un microscope, ou de tenter d'en modifier les valeurs (faisceau de rayons laser, etc.) que sur la carte mère d'un PC.
- De la capacité des cartes à puce à sauvegarder des informations persistantes réinscriptibles en mémoire (EEPROM).
- De fonctionnalités de cryptographie, présentes sur la majorité des cartes à puce, celles-ci étant typiquement utilisées pour stocker des clés cryptographiques.

L'application ainsi réalisée fournit :
- un compteur monotone sûr (qui ne retourne jamais deux fois la même valeur)
- difficilement attaquable au niveau matériel
- et, optionnellement, authentifié (l'appelant est ainsi certain que la valeur provient bien du compteur monotone).

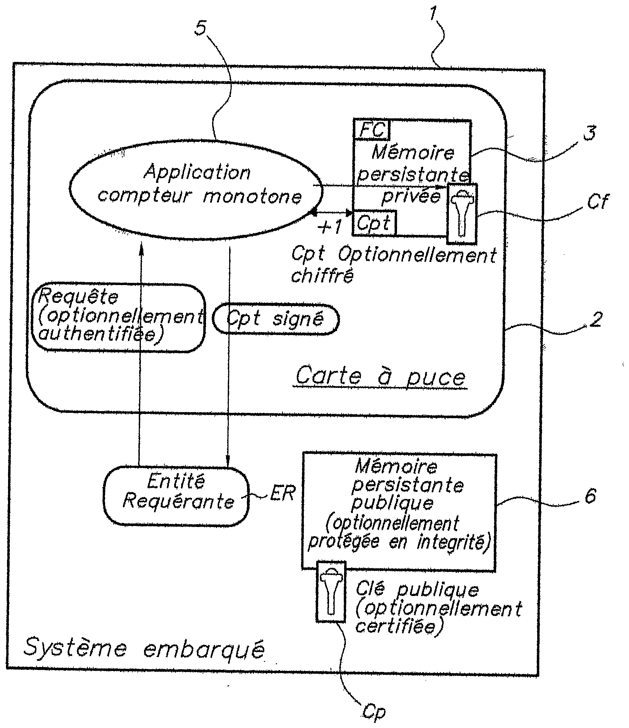

Un mode d'exécution de l'invention sera décrit ci-après, à titre d'exemple non limitatif, avec référence au dessin annexé dans lequel :
La figure unique est un schéma synoptique illustrant le détail de fonctionnement du compteur monotone dans le cas où la clé publique se trouve sur le système embarqué.

Dans cet exemple, le système embarqué (bloc 1) dispose d'une carte à puce (bloc 2) comportant une mémoire persistante privée (bloc 3) dans laquelle est stocké un compteur Cpt, une clé privée Cf stockée dans la partie de la zone de la mémoire persistante réinscriptible (bloc 3), protégée en lecture, et une fonction de comptage FC.

Le compteur Cpt et la clé privée Cf sont accessibles de la seule fonction de comptage FC. La modification du compteur Cpt par la fonction de comptage FC consiste en un incrément +1.

Sur la carte à puce (bloc 2), on trouve également une application de compteur monotone (bloc 5). Cette application, qui utilise la clé privée Cf, peut être automatiquement lancée dès que la carte 2 est sous tension, ou manuellement par le propriétaire de la carte 2. Elle répond à des requêtes émises par un appelant en provenance de l'extérieur de la carte.

Le système embarqué 1 comprend en outre une clé publique Cp (ou un certificat de clé publique Ccp) stockée dans une mémoire persistante publique (bloc 6) (idéalement, protégée en intégrité - c'est-à-dire qu'on ne peut pas la modifier de manière indue) par exemple en mémoire OTP ("One-Time Programmable memory" : mémoire programmable une fois) puisque de telles mémoires ne présentent pas de problème particulier d'intégration ou financier (les téléphones mobiles en disposent par exemple). Cette solution, qui correspond à celle indiquée sur la figure unique, permet de contrer les cas où un attaquant tenterait de construire une fausse application compteur monotone, avec une autre paire de clés, et remplacerait la clé publique authentique par la clé publique de la fausse application.

Alternativement, la clé publique Cp peut être stockée :
- Sur la carte à puce (bloc 2) : dans les cas où le système embarqué (bloc 1) ne dispose pas (ou pas suffisamment) de mémoire OTP, la clé publique Cp peut être conservée dans la mémoire persistante (bloc 3) de la carte à puce (bloc 2) Pour en assurer l'intégrité, la carte à puce (bloc 2) doit alors garantir qu'aucune autre application que le compteur monotone ne peut écrire/modifier cette zone.
- A l'extérieur du système embarqué : la clé publique Cp peut également être obtenue par le système embarqué par d'autres moyens, par exemple via une architecture PKI ("Public Key Infrastructure" : infrastructure clé publique) dédiée.

Dans les deux derniers cas - où la clé publique Cp n'est pas mémorisée sur le système embarqué (bloc 1) - il est également conseillé de mémoriser sur le système embarqué une empreinte de la clé publique Cp à utiliser. Cela permet de s'assurer qu'un attaquant n'a pas remplacé la carte à puce (bloc 2) par une autre carte à puce ou n'a pas mimé le comportement d'un PKI illégitime.

La clé publique Cp peut également être certifiée par une autorité attestant que la clé publique Cp correspond bien à l'application du compteur monotone 5. Dans ce cas, il est suffisant de mémoriser le certificat Ccp contenant la clé publique Cp. La clé publique Cp sert à vérifier la signature du compteur.

Pour obtenir une valeur du compteur monotone, l'Entité Requérante ER émet d'abord une demande compteur monotone vers l'application 5 située sur la carte à puce (bloc 2). Optionnellement, il est possible d'authentifier l'Entité Requérante ER en lui demandant de fournir une donnée secrète connue de la carte à puce. Cette donnée secrète peut être par exemple un PIN ("Personal Identify Number" : numéro d'identification personnel), un mot de passe ou une clé secrète connue des deux entités. Authentifier l'Entité Requérante ER permet de s'assurer que l'Entité Requérante ER est bien autorisée à demander une valeur du compteur monotone et ainsi à éviter les attaques par déni de service où un attaquant demanderait sans cesse une valeur rendant ainsi le service indisponible aux autres appelants (légitimes).

Ensuite, l'application 5 incrémente son compteur interne. Ce compteur est sauvegardé dans la mémoire persistante (bloc 3) de la carte à puce (bloc 2), et n'est accessible qu'à l'application de compteur monotone 5. Optionnellement, le compteur peut être conservé chiffré (par la clé publique de l'application). Cela permet d'éviter à des entités non autorisées de connaître la valeur courante du compteur monotone. Notamment, en cas de visualisation matérielle minutieuse, la valeur révélée serait chiffrée et donc inutilisable. La valeur courante du compteur est alors signée par la clé privée de l'application, et l'ensemble valeur du compteur + signature est retourné à l'Entité Requérante ER.

Finalement, l'Entité Requérante ER récupère la clé publique Cp de l'application. Suivant les cas, cette clé publique Cp peut être récupérée en mémoire dans le système embarqué (bloc 1), sur la carte à puce (bloc 2), ou depuis l'extérieur. Dans les deux derniers cas, il faut vérifier (si elle existe) l'empreinte de la clé publique Cp, puis la signature du compteur. Ensuite si la signature concorde, l'appelant est certain que la valeur du compteur est authentique. Il peut l'utiliser.

On notera que dans des contextes peu sensibles ou au contraire déjà ultra-sécurisés, il serait également envisageable de ne pas signer (ni vérifier) la valeur du compteur monotone. L'inconvénient est bien sûr que l'appelant n'a plus la certitude de son authenticité : la valeur pourrait éventuellement lui être fournie par un attaquant. Dans ce cas là, il n'est plus utile de stocker de paire de clés..

D'un point de vue implémentation, l'application de compteur monotone 5 s'implémente très facilement soit en tant qu'application native (à condition que l'accès à la mémoire persistante et aux fonctions cryptographiques soit possible), soit en tant qu'application interprétée. Dans ce dernier cas, l'application 5 peut être implémentée en tant qu'applet au sein de Java Card (marque déposée).

## Revendications

1. Procédé permettant de réaliser un compteur sécurisé sur un système informatique embarqué (1) disposant d'une carte à puce (2), comprenant les phases opératoires suivantes :
(i) le stockage, en mémoire persistante (3) de la carte à puce (2):
a. d'une fonction de comptage FC,
b. d'un compteur Cpt,
c. d'une clef privée Cf stockée dans la partie de la zone mémoire protégée en lecture,
le compteur Cpt et la clef privée Cf étant accessibles de la seule fonction de comptage FC,
(ii) l'exécution, lors de la réception par la carte à puce d'une requête de compteur émise par une entité requérante ER du système informatique embarqué (1), dans lequel l'entité requérante est en dehors de la carte à puce (2), des opérations suivantes :
a. la modification, par la fonction de comptage FC, du compteur Cpt assurant l'unicité de la valeur de compteur retournée en réponse à une requête donnée,
b. le calcul, par la fonction de comptage FC, d'une signature à partir de la valeur du compteur Cpt tel que modifié à l'étape (a) et de la clef privée Cf,
c. l'envoi, par la fonction de comptage FC, d'une réponse à l'entité requérante ER, ladite réponse comportant la valeur du compteur Cpt tel que modifié à l'étape (a) et la signature calculée à l'étape (b),
(iii) l'exécution, lors de la réception par le système embarqué (1) de la réponse à la requête de compteur, d'une vérification de la signature contenue dans cette réponse.

2. Procédé selon la revendication 1
**caractérisé en ce que**, lors de l'étape de calcul d'une signature au cours de la phase d'exécution d'une requête de compteur, l'entité requérante ER est préalablement authentifiée, et **en ce que** la requête de compteur n'est exécutée que si l'authentification a été effectuée avec succès.

3. Procédé selon la revendication 1,
**caractérisé en ce que** le compteur Cpt est stocké de manière chiffrée.

4. Procédé selon la revendication 1,
**caractérisé en ce que**, la modification du compteur Cpt par la fonction de comptage FC, consiste en un incrément de ce compteur.

5. Procédé selon la revendication 1,
**caractérisé en ce que** la vérification de la signature contenue dans la réponse à la requête de compteur est effectuée à l'aide d'une clé publique Cp stockée en mémoire persistante (bloc 6) sur le système embarqué 1.

6. Procédé selon la revendication 1,
**caractérisé en ce que** la vérification de la signature contenue dans la réponse à la requête de compteur est effectuée à l'aide d'une clé publique Cp et **en ce que** ladite clé publique Cp, ou le certificat de clé publique associé Ccp, est stockée dans la mémoire persistante de la carte à puce et retournée au système embarqué 1 à la demande de celui-ci.

7. Procédé selon la revendication 1,
**caractérisé en ce que** la vérification de la signature contenue dans la réponse à la requête de compteur est effectuée à l'aide d'une clé publique Cp et **en ce que** ladite clé publique Cp, ou le certificat de clé publique Ccp associé, est fournie par une infrastructure à clé publique et retournée au système embarqué 1 à la demande de celui-ci.

8. Procédé selon l'une des revendications 5, 6 et 7,
**caractérisé en ce que** la clé publique Cp, ou le certificat de clé publique Ccp associé, est stockée protégée en intégrité.

9. Procédé selon l'une des revendications 6 et 7,
**caractérisé en ce qu'**une empreinte de la clé publique Cp est stockée sur le système embarqué.

## Patentansprüche

1. Verfahren, das ermöglicht, einen sicheren Zähler auf einem Onboardcomputersystem (1) zu erzeugen, das über eine Chipkarte (2) verfügt, umfassend die folgenden Vorgangsschritte:
(i) das Speichern im persistenten Speicher (3) der Chipkarte (2):
a. einer Zählfunktion FC,
b. eines Zählers Cpt,
c. eines privaten Schlüssels Cf, der in dem Teil des geschützten Speicherbereichs beim Lesen gespeichert wird,
wobei der Zähler Cpt und der private Schlüssel Cf nur von der Zählfunktion FC aus zugänglich sind,
(ii) beim Empfang durch die Chipkarte einer Zähleranfrage, die von einer anfragenden Einheit ER des Onboardcomputersystems (1) ausgegebenen wird, wobei sich die anfragende Einheit außerhalb der Chipkarte (2) befindet, das Ausführen der folgenden Vorgänge:
a. das Modifizieren des Zählers Cpt durch die Zählfunktion FC, wobei die Eindeutigkeit des Zählerwerts, der als Antwort auf eine gegebene Anfrage zurückgegeben wird, sichergestellt wird,
b. das Berechnen einer Signatur aus dem Wert des Zählers Cpt, wie in Schritt (a) modifiziert, und des privaten Schlüssels Cf durch die Zählfunktion FC,
c. das Senden einer Antwort an die anfragende Einheit ER durch die Zählfunktion FC, wobei die Antwort den Wert des Zählers Cpt, wie in Schritt (a) modifiziert, und die Signatur, die in Schritt (b) berechnet wird, aufweist,
(iii) beim Empfang durch das Onboardsystem (1) der Antwort auf die Zähleranfrage, das Ausführen einer Überprüfung der Signatur, die in dieser Antwort enthalten ist.

2. Verfahren nach Anspruch 1, **dadurch gekennzeichnet, dass** bei dem Schritt des Berechnens einer Signatur während der Phase des Ausführens einer Zähleranfrage die anfragende Einheit ER zuvor authentifiziert wird und dadurch, dass die Zähleranfrage nur ausgeführt wird, wenn die Authentifizierung mit Erfolg durchgeführt worden ist.

3. Verfahren nach Anspruch 1, **dadurch gekennzeichnet, dass** der Zähler Cpt verschlüsselt gespeichert wird.

4. Verfahren nach Anspruch 1, **dadurch gekennzeichnet, dass** das Modifizieren des Zählers Cpt durch die Zählfunktion FC in einer Inkrementierung des Zählers besteht.

5. Verfahren nach Anspruch 1, **dadurch gekennzeichnet, dass** die Überprüfung der Signatur, die in der Antwort auf die Zähleranfrage enthalten ist, mit Hilfe von einem öffentlichen Schlüssel Cp durchgeführt wird, der im persistenten Speicher (Block 6) auf dem Onboardsystem 1 gespeichert wird.

6. Verfahren nach Anspruch 1, **dadurch gekennzeichnet, dass** die Überprüfung der Signatur, die in der Antwort auf die Zähleranfrage enthalten ist, mit Hilfe von einem öffentlichen Schlüssel Cp durchgeführt wird und dadurch, dass der öffentliche Schlüssel Cp oder das zugeordnete Zertifikat des öffentlichen Schlüssels Ccp in dem persistenten Speicher der Chipkarte gespeichert wird und an das Onboardsystem 1 auf dessen Anfrage zurückgegeben wird.

7. Verfahren nach Anspruch 1, **dadurch gekennzeichnet, dass** die Überprüfung der Signatur, die in der Antwort auf die Zähleranfrage enthalten ist, mit Hilfe von einem öffentlichen Schlüssel Cp durchgeführt wird und dadurch, dass der öffentliche Schlüssel Cp oder das zugeordnete Zertifikat des öffentlichen Schlüssels Ccp von einer Infrastruktur mit öffentlichem Schlüssel bereitgestellt wird und an das Onboardsystem 1 auf dessen Anfrage zurückgegeben wird.

8. Verfahren nach einem der Ansprüche 5, 6 und 7, **dadurch gekennzeichnet, dass** der öffentliche Schlüssel Cp oder das zugeordnete Zertifikat des öffentlichen Schlüssels Ccp integritätsgeschützt gespeichert wird.

9. Verfahren nach einem der Ansprüche 6 und 7, **dadurch gekennzeichnet, dass** ein Abdruck des öffentlichen Schlüssels Cp auf dem Onboardsystem gespeichert wird.

## Claims

1. Method allowing a secure counter to be achieved in and on-board computer system (1) having access to a chip card (2), comprising the following operating phases:
(i) storage, in a non-volatile memory (3) of the chip card (2):
a. of a counting function FC,
b. of a counter Cpt, and
c. of a private key Cf that is stored in the read-protected portion of the memory zone,
the counter Cpt and the private key Cf being accessible only to the counting function FC;
(ii) execution, on reception by the chip card of a counter request made by a requesting entity ER of the on-board computer system (1), wherein the requesting entity is off the chip card (2), of the following operations:
a. the modification, by the counting function FC, of the counter Cpt, ensuring the uniqueness of the counter value returned in response to a given request;
b. the calculation, by the counting function FC, of a signature on the basis of the value of the counter Cpt such as modified in step (a) and of the private key Cf, and
c. the transmission, by the counting function FC, of a response to the requesting entity ER, said response including the value of the counter Cpt such as modified in step (a) and the signature calculated in step (b); and
(iii) the execution, on reception by the on-board system (1) of the response to the counter request, of a verification of the signature contained in this response.

2. Method according to Claim 1,
**characterized in that**, in the step of calculation of a signature during the phase of execution of a counter request, the requesting entity ER is authenticated beforehand, and **in that** the counter request is executed only if the authentication has been carried out with success.

3. Method according to Claim 1,
**characterized in that** the counter Cpt is stored encrypted.

4. Method according to Claim 1,
**characterized in that** the modification of the counter Cpt by the counting function FC consists in an increment of this counter.

5. Method according to Claim 1,
**characterized in that** the verification of the signature contained in the response to the counter request is carried out using a public key Cp stored in non-volatile memory (block 6) on the on-board system 1.

6. Method according to Claim 1,
**characterized in that** the verification of the signature contained in the response to the counter request is carried out using a public key Cp and **in that** said public key Cp, or the associated public-key certificate Ccp, is stored in the non-volatile memory of the chip card and returned to the on-board system 1 on request by the latter.

7. Method according to Claim 1,
**characterized in that** the verification of the signature contained in the response to the counter request is carried out using a public key Cp and **in that** said public key Cp, or the associated public-key certificate Ccp, is delivered by a public-key infrastructure and returned to the on-board system 1 on request by the latter.

8. Method according to one of Claims 5, 6 and 7,
**characterized in that** the public key Cp, or the associated public-key certificate Ccp, is stored in an integrity-protected manner.

9. Method according to either of Claims 6 and 7,
**characterized in that** a fingerprint of the public key Cp is stored on the on-board system.
